# EUROPEAN PATENT APPLICATION

(11) **EP 0 675 452 A2**
(43) Date of publication of application: **04.10.1995**
(21) Application number: 95103864.5
(22) Date of filing: 16.03.1995
(51) Int. Cl.: G06F 17/30

(54) **Method and system for retrieving and presenting stored digital images**

(30) Priority: 01.04.1994 US 222198
(71) Applicant: International Business Machines Corporation, Armonk, N.Y. 10504 (US)
(72) Inventor: Aberi, Hamid, Tiburon, CA 94920 (US); Yeskel, Filip Jay, Charlotte, NC 28211 (US)
(74) Representative: Schäfer, Wolfgang, Dipl.-Ing.

(57) **Abstract**

A method and system for retrieving and presenting or displaying digital images on a portion of an operator's workstation where another portion may be simultaneously displaying a conventional application. The image display system includes a mechanism for browsing images at a speed and in a direction through the ordered images chosen by the operator, much like an operator might browse through successive images on microfilm in prior art systems. The direction of image scrolling is operator selectable and the selections may be entered at a workstation keyboard or from another application, so the operator may move forward through the ordered archive of images until the operator finds a key document, then move backward and forward slowly until the images of the document answer the questions or it is determined that the images will not answer it. When a specific image is displayed, the operator can zoom in, magnify, look at the other views of the document, print the image or take other action as appropriate, using the present system.

## Description

### CROSS REFERENCE TO RELATED PATENTS

The present invention relates to the following patents which are specifically incorporated herein by reference:
1. U.S. Patent No. 4,888,812 to Dinan et al. "Document Image Processing System", hereinafter sometimes referred to as the "Dinan Patent."
2. U.S. Patent No. 4,924,521 to White et al. entitled "Image Processing System and Method Employing Combined Black and White and Gray Scale Image Data", hereinafter sometimes referred to as the "White Patent."
3. EP application number 94 119 950.7, inventor Filip J. Yeskel, entitled "High Volume Document Image Archive System and Method" and sometimes referred to as the "Yeskel Archive Patent."
4. EP application number 94 118 757.7, inventor Filip J. Yeskel et al. entitled "Image Quality Analysis Method and Apparatus" and sometimes referred to as the "Yeskel Image Quality Patent."
5. EP patent application filed 16 February 1995 (Docket CT9-94-004), inventors Gregory M. Bednar et al., US priority March 23, 1994, entitled "Method and Apparatus for Image Processing at Remote Sites" and sometimes referred to as the "Bednar Patent."

The above patents are all owned by International Business Machines Corporation, the assignee of the present patent.

### BACKGROUND OF THE INVENTION

### Field of the Invention

The present invention relates to a method and system for processing stored digital images. More specifically, the present invention relates to a novel method and system for retrieving and presenting such stored digital images to an operator to allow the operator to "scan" such documents to locate desired information.

### Description of the Prior Art

Various techniques for storing and retrieving the details of a financial transaction or other historical record have been proposed in the past.

Historically these systems have employed storage of a plurality of photographic images of the relevant financial documents in sequence on microfilm or microfiche, with an index or other location information of each document (e.g., a counter value) being included in a predetermined location (e.g., near the beginning of the microfilm). The operator finds an approximate location of the desired document using the index, notes the counter value associated with it, then advances the microfilm at a rapid speed until the desired value appears on the counter, then moves the microfilm forward and backward at the documents until the correct (or desired) image is seen on the screen.

U.S. Patent 5,179,648 discloses a video display of stored information on an auxiliary video monitor using a rotary control knob, but this requires special hardware including the auxiliary video monitor and the rotary control knob. It is not clear that this system uses compressed images or can rapidly scroll through a series of images.

Many of the users of an image system also have an existing investment in other software (e.g., for processing checks in a conventional system without using image). These applications are used, for example, to balance and reconcile transactions, and it is desirable that these applications be brought forward and co-exist in an image-enabled environment. However, some embodiments of the prior art require that either an image application be operated on a separate image system or that conventional (non-image) applications can not be concurrently and interactively run without modification of the conventional applications. Further, some of the image systems which use conventional image processing equipment are so different from the previous systems for researching transactions that an operator must learn completely different skills to operate the system which seems, from the user's perspective, to be a completely different way of operating.

The Yeskel Archive Patent illustrates a system of filing images suitable for use in connection with the present invention. This Patent does not address retrieval or use of images in combination with conventional (non-image) applications like On Line Reject Repair (OLRR).

The Yeskel Image Quality Patent discloses a system using an image archive system such as is disclosed in the Yeskel Archive Patent for retrieving and presenting an image from a digital image storage to an image workstation for viewing by an operator for the purpose of assuring image quality. This Patent also does not combine conventional applications with image applications. Neither this Patent nor the Yeskel Archive Patent (nor any other known prior art) discloses a system for browsing an image archive or repository or database.

The foregoing and other limitations and disadvantages of the prior art system will be apparent to those skilled in the art of image processing in view of the following description of the invention and the appended claims and accompanying drawings.

### SUMMARY OF THE INVENTION

The present invention overcomes the disadvantages and limitations of the prior art by providing an image processing system which imitates and improves the browsing capabilities of a microfilm or microfiche system while allowing concurrent display and use of conventional or non-image applications on the same workstation.

The present invention has the advantageous effect that the operator need not choose between an image application and a non-image application, but may use both, either alternately or concurrently.

The present invention has the advantage of being consistent with the browsing operation of prior art physical media (such as microfilm) research to allow an operator to use an image processing system with a minimum amount of relearning.

The present invention has the advantageous effect of using conventional hardware and software for image processing and not requiring specialized equipment such as a microfilm reader of special or separate image display equipment.

Other objects and advantages of the present invention will be apparent to those skilled in the art in view of the following detailed description of the invention, taken with the appended claims and the associated drawings.

### BRIEF DESCRIPTION OF THE DRAWINGS

- Fig. 1: illustrates an environment for capturing images useful for processing in the present invention (a document image processing system).
- Fig. 2: shows the environment of the present invention wherein a personal computer and keyboard are used as both an image workstation and a conventional workstation.
- Fig. 3: shows a block diagram of the installation and setup of the present image processing system.
- Figs. 4A and 4B: show a block diagram of the use and operation of an embodiment of the present image processing system.
- Fig. 5: illustrates sequential snapshots of the data processing associated with image handling for use in the present invention.

### DETAILED DESCRIPTION OF A PREFERRED EMBODIMENT

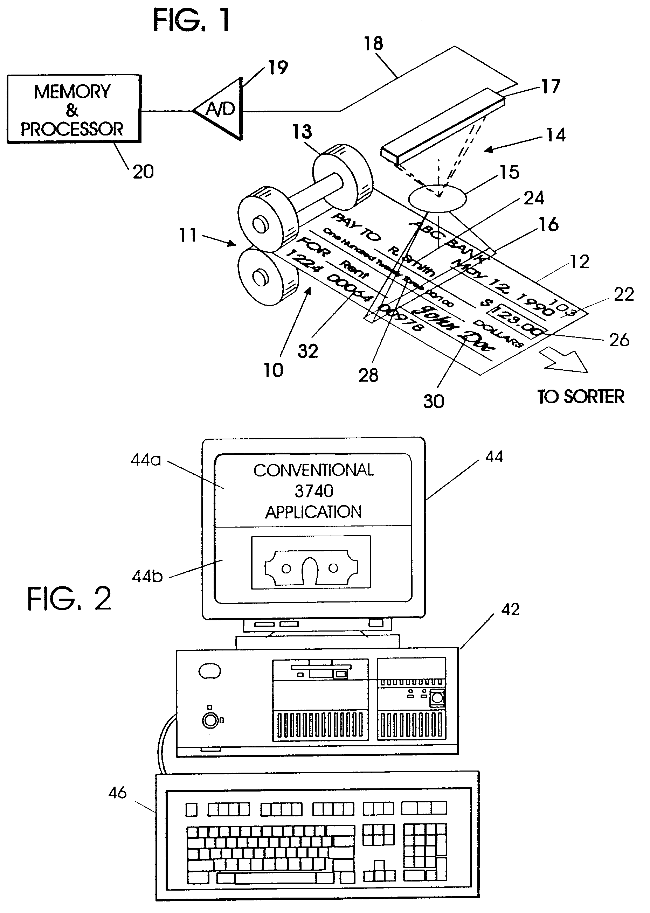

Figure 1 illustrates an image capture sub-system 10 within a document image processing system 11, such as IBM's Machine Type 3890 ImagePlus High Performance Transaction System (HPTS) image processing system. Such a system typically uses a document transport 13 to move a document 12 one at a time from an input hopper (not shown) sequentially past a plurality of processing stations and finally into one of serial output hoppers or pockets, based usually upon the information content read from the document under program control as it passes. This document transport moves the document at a system-determined speed based on the included belts and motors (not shown), but which may be at a relatively high speed (over 300 inches per second in a Model 3890 which allows the system to process 2400 documents per minute).

The document image processing sub-system 11 and its image capture system 11 include a optical system 14 with a focusing lens 15 and a linear array 17 to capture an electrical digital representation of each line 16 of the document, based on either the black/white or gray characteristics of the document. While the resolution of the system depends on its design and components, one example divides each inch into 240 picture elements (pels or pixels) in each of the horizontal and vertical directions. Other systems include 300 pels per inch in each direction for a better resolution at a higher cost.

The linear array 17 is commercially available from various manufacturers, such as Reticon, and may be a series of charge coupled device (CCD) sensors in which the impinging light on each sensor develops an electrical signal proportional to the amount of light during a period of time. The electrical signals pass on line 18 to analog-to-digital converter 19, which together with appropriate thresholding, provides for each pel a digital representation which is then stored in memory 20 for storage and/or further processing as desired. For further details of an image capture and processing system, see U. S. Patent No. 4,888,812 to Dinan et al., which is specifically incorporated herein by reference.

The document 12 may include a variety of indicia, some of which may be printed and some may be handwritten. Other documents may include typewritten characters or those printed by machine. The illustrated example of document 12 is a check, and the indicia including a date field 22, a payee line 24, an amount field 26 (sometimes referred to as a "courtesy amount field" which comprises numerals rather than words in most cases), a field 28 including the amount in words, a space for the drawer's signature 30 and a MICR codeline 31.
Date from the document 12 is obtained in one or more known and conventional manner(s) and is stored into database(s) for future processing. Typically, the information is indexed and the index is stored at the beginning of the file for assisting access to a given record.

Figure 2 illustrates the user environment for the present invention, where the user or operator works at an image workstation 40 including a personal computer system unit 42 with an image capable display 44 and a standard personal computer keyboard 46. The system is preferably a conventional personal computer, but could also be a workstation of the type which IBM offers as its ImagePlus HPTS image workstation which is also used for image applications such as keying, data preparation, balancing and other workstation function.

The personal computer system unit 42 may be an IBM PS/2 Model 80 and is preferably coupled to an image repository or database, a source of stored images of checks of other documents, through a token ring and an image processing unit, all coupled in conventional manners such as is employed in the IBM ImagePlus HPTS document image processing system.

The image display 44 may be a conventional image monitor of the type sold by IBM as the Model 8514 and used in the IBM ImagePlus HPTS document image processing system. The display 44 has a cathode ray tube display area which is divided into an upper display area 44a and a lower display area 44b.

The keyboard 46 is a conventional personal computer keyboard but includes, preferably associated with the system in the associated software, programming which allows the operator to indicate desired image browse functions such as high speed locate, browse forward and browse backward. These functions may be invoked by user specified keys or by selections from on-screen menus. Other available functions include:
forward/backward/up/down a fractional image, image rotate, alternate view of document (e.g., back view), image expand, image reduction, image enhancement (brightness, contrast), print, export to file, FAX, etc. These functions can also be defined in terms of the keys on the keyboard 46 (to avoid the necessity of a separate controller or different hardware). Further, the selection of keys to accomplish a given function can be reprogrammed to a different key (or eliminated in certain applications) as desired through conventional techniques.

The terms "image application" and "non-image application" have been used in this document with the understanding that an image application is one which display to an operator an image of a document (or portion thereof) and a non-image application is one which does not display such an image. Furthermore, the term "image enabling" refers to features of the image application that enable it to use information from the non-image application without requiring any changes to the non-image application. In other words, the non-image application may have been designed to be used in an independent manner and need not be changes as it is "unaware" of the image enabling provided by the image application. This allows existing non-image applications (of which many exist and in which banks have made large investments) to be used with image applications without changes. In the preferred embodiment, the images are captures in digital form (either black/white or grey scale or both as disclosed in the White Patent), compressed and stored in an optical storage system in a conventional manner. The images are stored at a central location in the preferred embodiment as described in the Bednar Patent, but other storage techniques (i.e., magnetic storage as discussed in the Dinan Patent) are known and compression is optional.

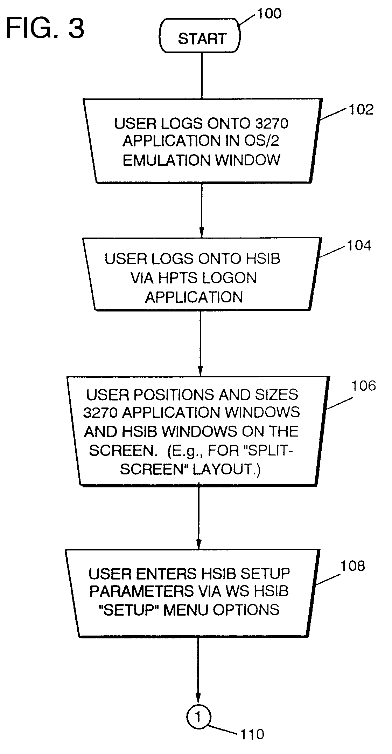

Figure 3 illustrates a block diagram of the installation and setup of the present image processing system according to the present invention. Beginning at a start block 100, the user logs on to a 3270 application in an OS2 emulation window at block 102. The 3270 application is a conventional application that runs in the conventional, or non-image, part of the system and is displayed on the upper half of the display in Figure 2.

After the user has logged on to the conventional or 3270 application in the block 102, control proceeds to block 104 where the user logs on to an image application such as a high speed image browse (HSIB) using the HPTS logon application. This application is hereafter referred to as "high speed image browse" or HSIB. This HSIB application has both a host-resident component and a workstation-resident component. In general, the workstation-resident component provides user interface and image manipulation functions and communicates with the host component. The host-resident component interfaces with image archive, repository or database (stored on the host) and manages the flow of images in the system.

At block 106 the user then positions and sizes the 3270 or conventional application window and the HSIB application window on the screen, as shown in Figure 2, where the screen is split for the upper portion to be the conventional or 3270 application and the lower to be the image application.

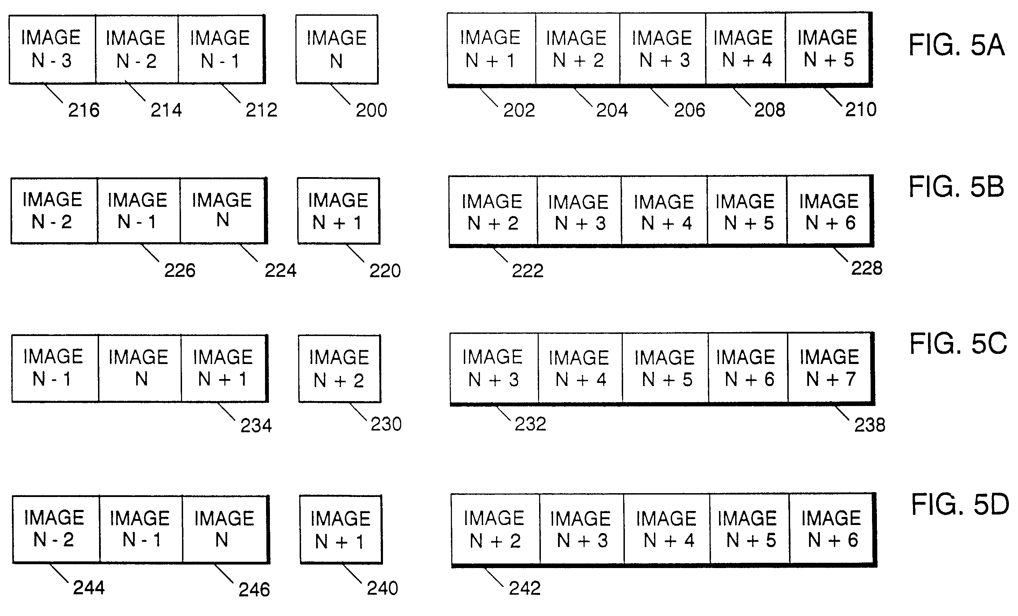

At block 108 the user defines the setup parameters by workstation high speed image browse setup menu options. The setup parameters include the information necessary to build a high speed locate key from information supplied by the user on the conventional application. The high speed locate key allows a user to identify a document of interest. This key is an index into the image archive, repository or database. Setup parameters also include image retrieval parameters such as which document views are to be retrieved, the scaling factor, the number of adjacent images to be retrieved in the forward direction, the number of adjacent images to be retrieved in the backward direction, and the look ahead threshold (explained in detail in conjunction with Figure 5.

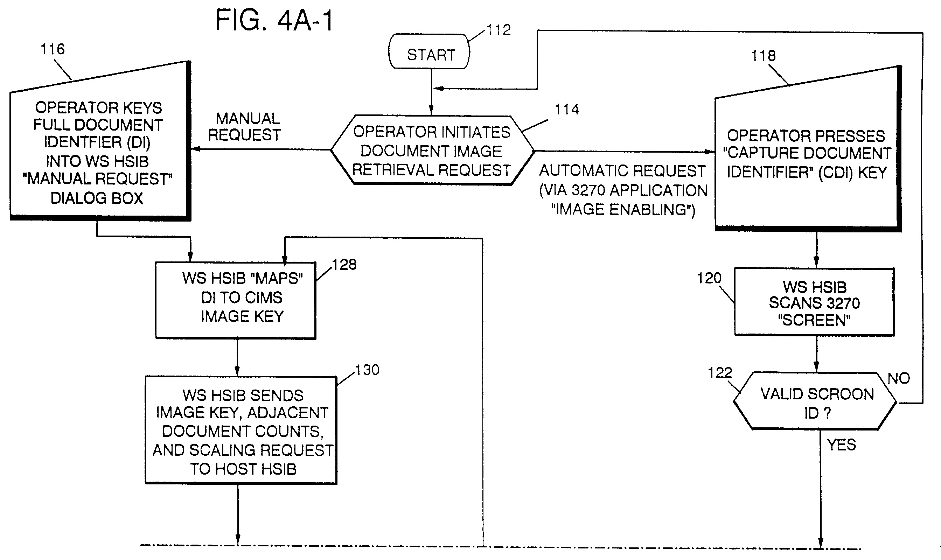

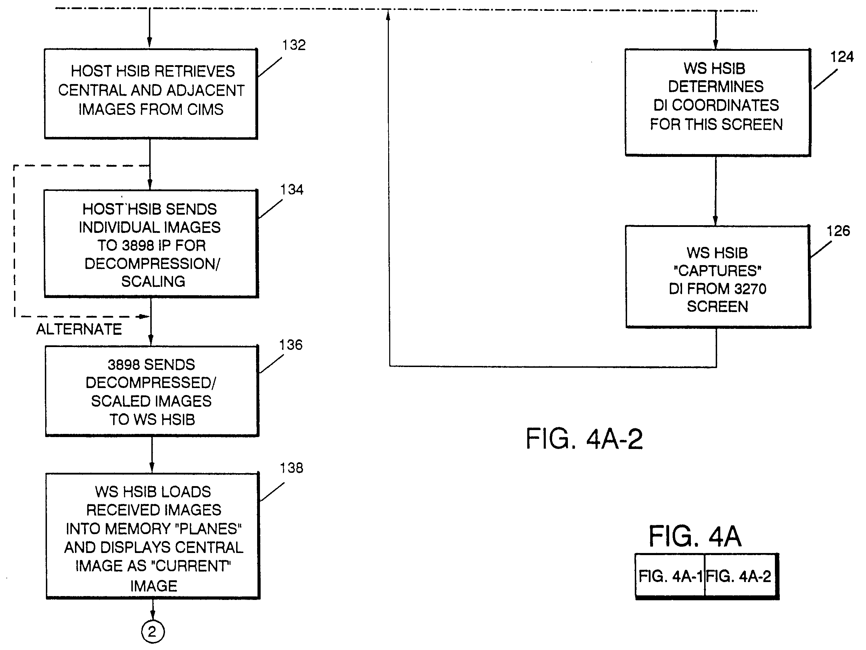

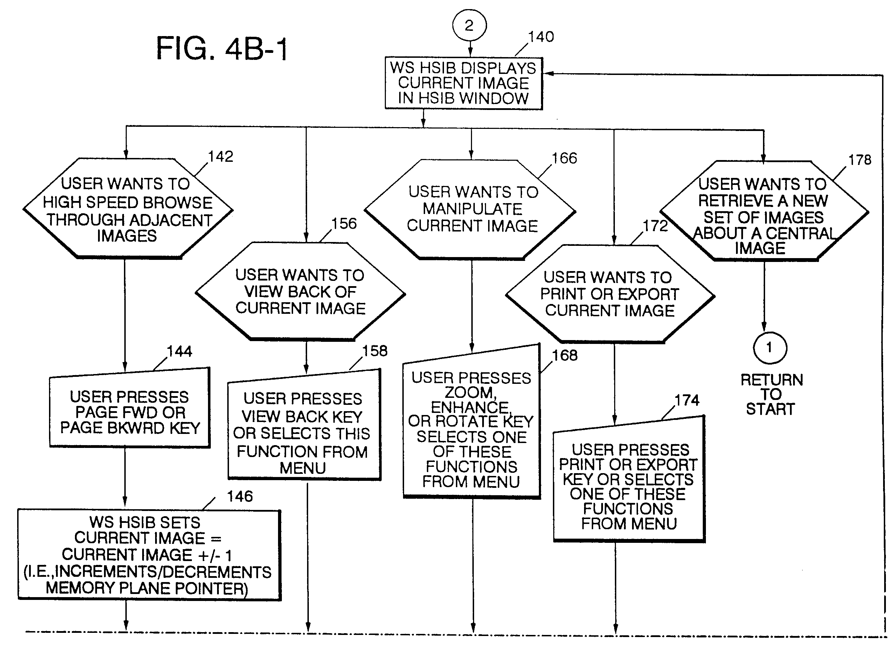

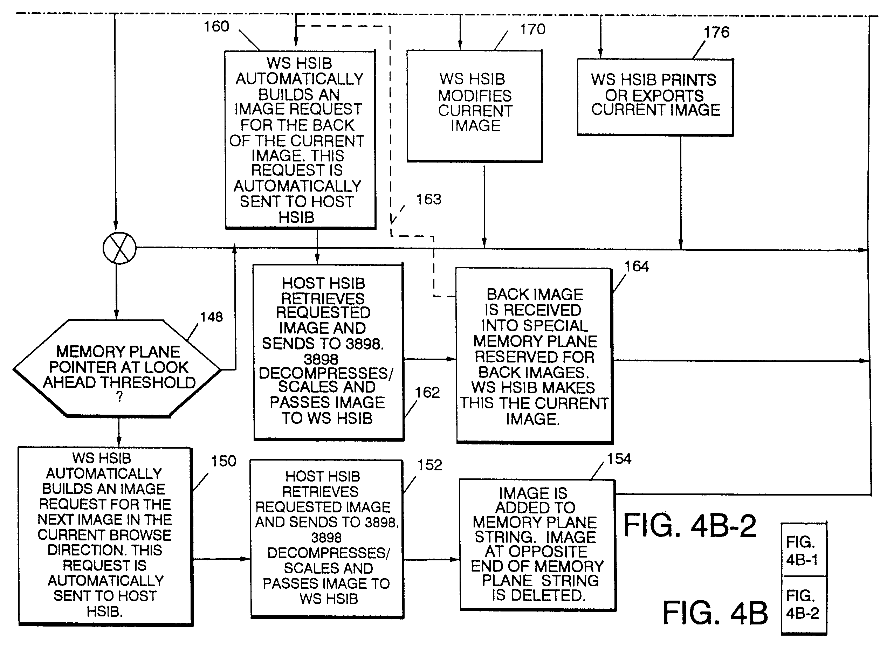

After the installation and setup of blocks 102, 104, 106, 108 have been completed, control continues to the exit block 110 for entry into the high speed image use and operation flickered of Figures 4A and 4B.

As shown in Figure 4A, the block diagram of the use and operation of the present image processing system to enable the image browse at variable speed is depicted. The control starts at block 112 and proceeds to block 114 which is indicated as the initiation of a document image retrieval request. That request is either a manual request indicated by the line proceeding to the left from block 114 to block 116 or an automatic request from some of the applications such as a 3270 application which is image enabled. Such an automatic request from an image enabled application proceeds to block 118 where the operator presses a key entitled "Capture Document Identifier" or CDI key which is valid in either the image browse or the 3270 session. The CDI key may or may not have other meanings in other applications such as it may be the enter key for a 3270 application. In this case however, the document identifier proceeds into the system for processing at this point. At block 120 the workstation high speed image browse application scans the 3270 screen and at block 122 determines whether the screen id is valid. If so, control then passes to block 124 and if not, control returns to block 114, because the identifier is invalid and therefore there is no document to go seek and find. At block 124 the workstation high speed image browse application determines the document identifier (DI) coordinates for this screen and control then passes to block 126 where the DI or the document identifier from the 3270 screen is then passed to block 128.

In a similar way, if there is a manual request from block 114, at block 116 the operator keys the full document identifier (DI) into the workstation high speed image browse manual request dialog box and control passes to block 128.

At block 128 the workstation high speed image browse application maps the document identifier into a CIMS (Check Image Management System offered as part of IBM's Application Library Service software offering) image key as a first step to obtaining the image from the image archive repository at database.

At block 132 the host high speed image browse application receives the central or requested image and adjacent images from the check image management system software, which Check Image Management Software (CIMS) is standard image software, part of a suite of applications available from IBM as its ImagePlus HPTS software.

In one system configuration the individual images are sent at block 134 to an IBM 3898 Image Processor decompression and scaling, if the images have been compressed and scaled prior to storage. At block 136 the decompressed images are sent to the workstation high speed image browse application.

In another system configuration the 3898 Image Processor is bypassed and the images are sent directly to the workstation for decompression and scaling.

At block 138 the images that are sent are loaded into memory planes and a central image is displayed as the current image. More of the description of the current image and the adjacent images is given in connection with Figure 5 and the associated sub-figures 5A, 5B, 5C and 5D.

After block 138, control passes to Figure 4B and the central or current image is displayed at block 140 on the image portion of the image workstation as shown in Figure 2. From there at block 142 the user may select to browse through adjacent images. If he does choose that by pressing the appropriate key, at block 144, he presses the key such as the page forward or page backward key from either the high speed image browse or the 3270 session to indicate that he wants to move either forward or backward through the images which is accomplished at block 146 by incrementing or decrementing the memory plane pointer and at block 148 the memory plane pointer determines if it is at the look ahead threshhold, a set of parameters that determine when to fetch additional images (either one at a time or in batches, depending on system design, system costs, parallel processing and other considerations) so as to enable an infinite browse. If it is at the "look ahead threshhold", it automatically builds an image request for the next "n" images in the current browse direction and sends to the host high speed image browse or HSIB application where at block 152 it retrieves the requested image and (optionally) sends it to the 3898 for decompression and scaling as described before and passing to the workstation high speed image browse. At block 154 the images are added to the memory plane string and images at the opposite end of the memory plane string are deleted.

Returning to block 140, the user may select to view the back of the current image by striking the appropriate key on his keyboard at block 158, where he has pressed the view back key or selected this function from a menu. In that case at block 160 the workstation component of HSIB automatically builds a request for the back of the current image and sends it to the host high speed image browse component. At block 162 the host component of the high speed image browse retrieves the image and, in one embodiment, sends it to the image processor 3898 at block 162 where it is decompressed and scaled and passed to the workstation. At block 164 the back image is received into the memory plane for display of the back image and then makes this the current image. Alternatively, the back of the current image could have been automatically requested and retrieved coincident with the front, in which case block 158 proceeds directly to block 164, shown by dotted line 163.

Returning to block 140 from this block where there is an image displayed or from block 156, the user may elect to manipulate the current image at block 166. At block 168 the user presses the button associated with the manipulation of the image for instance zoom, enhance or rotate and at block 170 the software modifies the current image in the manner selected.

At block 172, the user may elect to print or export a current image at block 174 he indicates this by pressing the print or export key or selects from a menu these features and at block 176 the activity is conducted. The print function in the preferred embodiment is a "what you see is what you get" and the export function causes the specific image or all images associated with current document to be transformed into one of a variety of alternate formats (e.g., TIFF CCITT G4) and written to a workstation file, passed to another application, faxed or otherwise exported.

At block 178 if the user is done with the current image and wishes to receive another central image, then he returns to the start (the beginning of Figure 4A).

In Figure 5 several stages depicted by Figures 5A, 5B, 5C and 5D are depicted to indicate the central image and the movement forward and backward which is possible as a user browses through the images. In Figure 5A, the user has selected image N as the central image, for example, either by a manual request from block 116 in Figure 4A or by an automatic request through blocks 118-126 in Figure 4A. That image is displayed as depicted by the block 140 in Figure 4B. It has been represented in Figure 5A as image N and it is shown as reference numeral 200.

The request for the central image N has also generated at block 132 request for adjacent images from the CIMS database and these adjacent images are indicated as images N+1 at block 202, image N+2 at block 204, image N+3 at block 206, image N+4 at block 208 and image N+5 at block 210 as well as the preceding three images, image N-1 at block 212, image N-2 at block 214 and image N-3 at block 216.

The number of images which are retrieved either before or after the desired image are identified as part of the setup parameters at block 108 as described in conjunction with Figure 3.

When the user indicates to move forward, (for example by pressing the page forward or page backward key at block 144 to indicate the high speed browse of block 142 in Figure 4B), image N+1 becomes the current or central image as shown at block 220 in Figure 5B. All the other images have moved to the left that is, image N+2 which was two removed from the central image has moved to block 222 or adjacent to the central image and the image N has moved to be the preceding image at block 224. The image N-1 is now shown as two prior to the current or central image in block 226. At the same time, the block 228 requires an additional image to be fetched because the look ahead threshhold at block 148 has been exceeded and the image was requested at block 150 retrieved at block 152 and added to the memory plane string at block 154.

On the next movement forward in images, image N+2 becomes the central image at block 230 in Figure 5C. Each of the other images N+3-N+6 has moved one place to the left so N+3 is in block 232 adjacent to the central image and the next image which would be displayed if forward movement is desired and the image N+1 has also moved to the left to be the preceding image at block 234. Similarly, image N and image N-1 have also moved leftward in Figure 5C from their position in Figure 5D. Additionally, image N+7 has been requested through the image request system of block 150 retrieved at block 152 and added to the memory string through block 154.

If the operator now decides that he has gone too far forward and wishes to move backward by one image, Figure 5D illustrates this where image N+1 is now the central image at block 240. Image N+2 is now in block 242, the next image to be viewed in the forward direction and at box 244, an image N-2 has been requested to fill the blank space as all the images moved to the right between Figure 5C and 5D to accomplish the backward movement in the images. Image N is now in the block 246 immediately prior to the current image (the central image) 240 which is being displayed.

The forward and backward movement of images can be accomplished and the speed at which it is accomplished in dependent either on the operator's input (to move forward or to move backward) or the passage of time which the operator can control by indicating to move forward or backward either at a high speed or at a low speed. The keys which initiate this action are arbitrary and subject to be designated differently according to the discretion of the operator. For example, the Page Fwd/Page Bwd keys could initiate high speed image browse when held depressed and low speed image browse when momentarily pressed. This is analogous to the use of a key which, when held depressed, repeats ("typo-matic") on a conventional keyboard.

Of course many modification and adaptations to the present invention could be made to advantage without departing from the spirit of this invention. Further, some features of the present invention could be used without corresponding use of other features. For example, the system described envisions looking at only one document in its entirety at a time, while in some applications looking at multiple documents simultaneously (e.g.,a deposit slip and the associated deposited item) may be desirable, while in other applications, only a part of the document may need to be displayed. Accordingly, this description should be considered as merely illustrative of the principles of the present invention and not in limitation thereof.

## Claims

1. A method of retrieving and presenting stored digitized images on a workstation including a display and a keyboard, comprising the steps of:
identifying location information indicative of an approximate index location of a subject document in an image archive repository or database;
retrieving the image information associated with the subject document from the subject image archive repository or database; and
moving sequentially through the archive repository or database in a direction as chosen by the operator either forward or backward as desired in response to an operator entry on the keyboard, until the image of interest is presented on the display.

2. A method of presenting images including the steps of Claim 1 wherein the method further includes the steps of receiving a command selecting an alternate image view of the subject document and obtaining and displaying such alternate view of the subject document.

3. A method of presenting images including the steps of Claim 1 wherein the method further includes the steps of receiving a command to change the presentation of the image and changing the presentation of the image in response to the command.

4. A method of presenting images including the steps of Claim 3 wherein the receiving step includes selecting by a program the change of presentation of the image.

5. A method of presenting images including the steps of Claim 3 wherein the receiving step includes selecting by an operator's depressing a key on a keyboard to change the presentation of an image.

6. A method of presenting images including the steps of Claim 3 wherein the receiving step includes selecting by an operator of another presentation mode based on the image presented.

7. A method of presenting images including the steps of Claim 3 wherein the changing step includes a function selected from zoom, rotate or enhance.

8. A method of presenting images including the steps of Claim 1 wherein the steps of the method further include:
presenting information from a first non-image application on one region of the display; and
presenting information from a second image application on a second region of the display, wherein, in response to the operator entry based on the first application, the information on one region is changed while information in the other region is maintained.

9. A method of presenting images including the steps of Claim 8 wherein the non-image application is unchanged for operation in conjunction with the new image application.

10. A method of presenting images including the steps of Claim 1 wherein the step of moving includes receiving an operator input indicating the direction of desired movement of images.

11. A method of presenting images including the steps of Claim 8 wherein the step of changing information in one region in response to an operator entry includes displaying a series of images of documents in the sequence in which they are indexed.

12. A method of presenting images including the steps of Claim 11 where, in response to an operator entry at a keyboard, the speed of displaying the series of images is changed, and the change of speed is either from a faster speed to a slower speed or from a slower speed to a faster speed.

13. A system of browsing through images on a computer display in a direction and at a speed chosen by an operator by keying at a keyboard coupled to a computer coupled to the display, the system comprising:
a source of ordered images;
means for identifying a desired starting image selected from the source of images;
means for displaying the starting image and subsequent images on the computer display; and
means for receiving an operator input for indicating a direction and speed to move through the source of ordered images to display sequentially the images.

14. A method of retrieving and displaying a series of images from an ordered image archive, the steps of the method comprising:
identifying an image of a document from the image archive retrieving the image from the image archive and displaying the image of the identified document from the image archive;
receiving an indication from an operator of desired movement through the image archive including a direction of movement and the speed; and
displaying, in response to the operator's indications, images from the image archive at the rate and in the direction from the archive as selected by the operator.
